# EUROPÄISCHE PATENTANMELDUNG

(11) **EP 1 320 170 A2**
(43) Veröffentlichungstag der Anmeldung: **18.06.2003**
(21) Anmeldenummer: 02027039.3
(22) Anmeldetag: 03.12.2002
(51) Int. Cl.: H02K 5/22

(54) **Antriebs- und/oder Abbremsvorrichtung**

(30) Priorität: 12.12.2001 DE 10160848
(71) Anmelder: Valeo Motoren und Aktuatoren GmbH, 74321 Bietigheim-Bissingen (DE)
(72) Erfinder: Frey, Ronald, 74357 Bönningheim (DE); Helmich, Johannes, 97877 Wertheim (DE); Schmidt, Harald, 74374 Zaberfeld (DE); Scheytt, Birgit, 75428 Illingen (DE); Baeskow, Werner, 74394 Hessigheim (DE)
(74) Vertreter: Jahn, Wolf-Diethart

(57) **Zusammenfassung**

Die Erfindung betrifft eine Antriebs- und/oder Abbremsvorrichtung, insbesondere zur Anordnung an Kraftfahrzeugen, mit einer elektrischen Antriebseinheit und/oder mit einer elektromagnetischen Bremseinheit, wobei eine Welle von der Antriebseinheit antreibbar und/oder von der Bremseinheit abbremsbar ist, mit einem die Antriebsund/oder Bremseinheit aufnehmenden geschlossenen, insbesondere wasser- und luftdichten Gehäuse, und mit einem Kabelsatz zur Anbindung der Antriebsvorrichtung an eine Stromquelle.

Die Erfindung kennzeichnet sich dadurch, dass der Kabelsatz wenigstens eine Hohlleitung zur Belüftung des Innenraumes des Gehäuses aufweist.

## Beschreibung

Die Erfindung betrifft eine Antriebs- und/oder Abbremsvorrichtung, insbesondere einen Stellantrieb für ein Sperrdifferential eines Kraftfahrzeuges, mit einer elektrischen Antriebseinheit und/oder mit einer elektromagnetischen Bremseinheit, wobei eine Welle von der Antriebseinheit antreibbar und/oder von der Bremseinheit abbremsbar ist, mit einem die Antriebs- und/oder Bremseinheit aufnehmenden geschlossenen, insbesondere wasser- und luftdichten Gehäuse, und mit einem Kabelsatz zur Anbindung der Antriebs- und/oder Abbremsvorrichtung an eine Stromquelle.

Derartige Antriebs- und/oder Abbremsvorrichtungen finden insbesondere im Kraftfahrzeugbau zur Unterstützung der Antriebs- und Bremssysteme Verwendung. Sie können insbesondere als Stellantrieb zur Betätigung eines Sperrdifferentials eines Kraftfahrzeuges verwendet werden.

Die gattungsgemäßen Vorrichtungen müssen hierbei extremen Anforderungen gerecht werden. Die Betriebstemperatur von elektromagnetischen Bremsen liegt im Bereich von ca. 200EC. Bei Anordnung der Vorrichtung im Bereich beispielsweise von Fahrzeugkatalysatoren kann die Betriebstemperatur der Antriebsvorrichtung bis 200EC ansteigen. Je nach Witterungsverhältnissen kann eine schlagartige, starke Abkühlung der Antriebs- und/oder Abbremsvorrichtungen erfolgen, so z.B. beim Durchfahren einer Wasserpfütze.

Grundsätzlich sind die Vorrichtungen luft- und wasserdicht auszubilden, um sie vor Umwelteinflüssen zu schützen. Im Hinblick auf die extremen Temperaturschwankungen, denen die gattungsgemäßen Vorrichtungen ausgesetzt sein können, sind innerhalb der Vorrichtung auftretende Temperatur- und damit Druckunterschiede zu berücksichtigen.

Aus dem Stand der Technik ist es bekannt zur Belüftung der Vorrichtungen Labyrinthdichtungen vorzusehen. Derartige Dichtungen sind allerdings nicht tauchdicht. Ferner ist es zur Erreichung eines Druckausgleiches bekannt, Membranen an dem Gehäuse der Vorrichtung vorzusehen. Membranen sind allerdings deshalb nicht geeignet, weil sie nicht dampfstrahlbeständig sind und/oder durch Verschmutzung funktionsunfähig werden.

Der vorliegenden Erfindung liegt deshalb die Aufgabe zugrunde, eine Antriebs- und/oder Abbremsvorrichtung vorzuschlagen, welche zum einem wasser- und luftdicht ausgebildet werden kann und zum anderen einen Druckausgleich aufgrund extremer Temperaturschwankungen ermöglicht. Dabei soll sie insbesondere tauchdicht und dampfstrahlbeständig sein.

Diese Aufgabe wird bei einer Antriebs- und/oder Abbremsvorrichtung der eingangs beschriebenen Art erfindungsgemäß dadurch gelöst, dass der Kabelsatz wenigstens eine Hohlleitung zur Belüftung des Innenraumes des Gehäuses aufweist.

Dies hat den Vorteil, dass über die Hohlleitung ein Druckausgleich erfolgen kann, ohne dass die Funktionsfähigkeit der Vorrichtung beeinträchtigt wird. Die Hohlleitung verbindet hierbei den Innenraum des Gehäuses mit der Umgebung und insbesondere mit dem Fahrerinnenraum. Vorteilhafterweise sind keine zusätzlichen Bauteile vorzusehen, deren Bereitstellung und Montage zusätzliche Kosten verursachen würde. Vielmehr werden vorhandene Bauteile, nämlich ein vorhandener Kabelsatz, zur Lösung der genannten Aufgabe herangezogen. Über den Kabelsatz bzw. die vorzusehende Hohlleitung kann erreicht werden, dass das der Vorrichtung abgewandte Ende der Hohlleitung mehrere Dezimeter bis Meter von dem Gehäuse entfernt angeordnet sein kann. Das zur Atmosphäre hin offene Ende der Hohlleitung ist an einer geeigneten Stelle so anordenbar, dass keine unerwünschten Umwelteinflüsse, insbesondere kein Wasser, über die Hohlleitung in das Gehäuse eindringen kann.

Erfindungsgemäß ist denkbar, dass zwei oder mehrere Hohlleitungen innerhalb des Kabelsatzes vorgesehen sein können, um die Belüftung des Innenraums des Gehäuses zu verbessern. Auftretende Druckunterschiede werden so schnell und ohne Beeinträchtigung der Funktionsweise der Vorrichtung ausgeglichen.

Bei einer bevorzugten Ausführungsform der Erfindung ist vorgesehen, dass an dem der Antriebsvorrichtung abgewandten Ende des Kabelsatzes ein das Ende der Hohlleitung umfassendes Steckerelement vorgesehen ist. Vorteilhafterweise ist das Steckerelement zur Verbindung von elektrischen Leitungen, die den Kabelsatz durchsetzen, zu verwenden. Dadurch, dass das der Atmosphäre zugewandte Ende der Hohlleitung in dem vorgesehenen Steckerelement endet, sind keine zusätzlichen Bauteile vorzusehen, die das freie Ende des Kabelsatzes umfassen.

Erfindungsgemäß ist außerdem denkbar, dass an wenigstens einem Ende der Hohlleitung ein Filter und/oder ein Ventil angeordnet ist. Hierdurch kann unterbunden werden, dass unerwünschte Medien, wie insbesondere Wasser, über die Hohlleitung in das Gasgehäuse der erfindungsgemäßen Vorrichtung eindringen können.

Eine weitere Ausgestaltung der Erfindung sieht vor, dass der Kabelsatz in dem Bereich, in dem er das Gehäuse durchquert, mit einem Dichtelement gegen das Gehäuse abgedichtet ist. Ein derartiges Dichtelement ist vorzugsweise gummiartig und gewährleistet eine wasser- und luftdichtes Führen des Kabelsatzes in das Innere des Gehäuses.

Vorzugsweise kann hierbei die Hohlleitung innerhalb des Gehäuses unmittelbar nach dem Dichtelement enden.

Weiterhin ist erfindungsgemäß denkbar, dass das Gehäuse zweiteilig ausgebildet ist, wobei das Dichtelement in einer Ausnehmung zwischen den beiden Gehäuseteilen angeordnet ist. Das eine Gehäuseteil ist vorzugsweise ein topfförmiges Grundgehäuse. Das andere Gehäuseteil kann ein flanschartiges Deckelelement sein, das mit der offenen Seite des Grundgehäuses verschraubt wird. Das Dichtelelement sitzt hierbei vorzugsweise unter einer definierten Vorspannung in der Ausnehmung zwischen den beiden Gehäuseteilen.

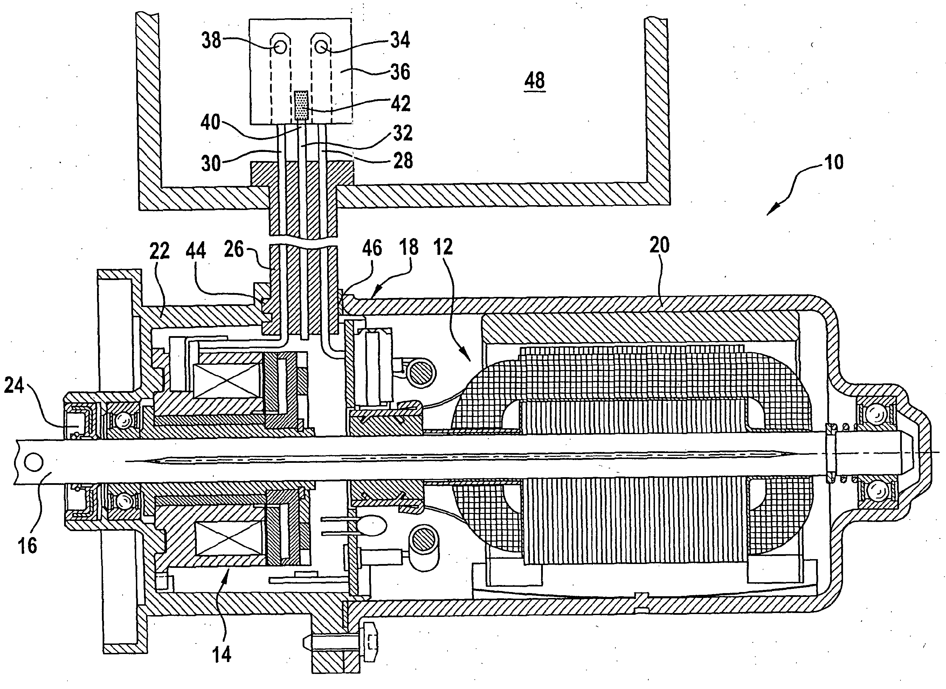

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

In der Figur ist eine Antriebs- und Bremsvorrichtung 10 im Längsschnitt dargestellt. Die Vorrichtung 10 wird insbesondere zur Betätigung eines Sperrdifferenzials für Kraftfahrzeuge verwendet. Die Vorrichtung 10 weist eine elektrische Antriebseinheit 12 sowie eine elektromagnetische Bremseinheit 14 auf. Ferner sieht die Vorrichtung 10 eine Welle 16 vor, die zum einen von der Antriebseinheit 12 antreibbar und zum anderen von der Bremseinheit 14 abbremsbar ist.

Die Antriebseinheit 12 sowie die Bremseinheit 14 sind in einem geschlossenen wasser- und luftdichten Gehäuse 18 untergebracht. Das Gehäuse 18 setzt sich aus zwei Gehäuseteilen 20 und 22 zusammen. Das Gehäuseteil 20 ist topfförmig ausgebildet und nimmt die Antriebseinheit 12 auf. Das Gehäuseteil 22 ist an das Gehäuseteil 20 anflanschbar und nimmt die Bremseinheit 14 auf. Die Welle 16 ragt durch das Gehäuseteil 22 hindurch, wobei zwischen dem Gehäuseteil 22 und der Welle 16 eine Wellendichtung 24 vorgesehen ist.

Die Vorrichtung 10 sieht ferner einen Kabelsatz 26 zur Anbindung an eine nicht dargestellte Stromquelle vor. Der Kabelsatz 26 zeigt drei beispielhaft dargestellte Leitungen 28, 30 und 32. Die Leitung 28 verbindet die elektrische Antriebseinheit 12 mit einem Pin 34 eines an dem dem Gehäuse 18 abgewandten Ende des Kabelstrangs 26 vorhandenen Steckerelements 36. Entsprechend verbindet die Leitung 30 die elektromotorische Bremseinheit 14 mit einem weiteren Pin 38 des Steckerelements 36.

Die Leitung 32 ist als Hohlleitung ausgebildet und verbindet den Innenraum des Gehäuses 18 mit der Atmosphäre bzw. mit dem Fahrerinnenraum, der mit dem Bezugszeichen 48 angedeutet ist. Der Kabelsatz 26 kann bei einer erfindungsgemäßen Vorrichtung 10 mehrere Dezimeter bis Meter betragen. Vorteilhafterweise endet der Kabelsatz an einer Stelle, die vor unerwünschten Umwelteinflüssen geschützt ist.

In der Figur ist angedeutet, dass an dem dem Gehäuse 18 abgewandten Ende 40 der Hohlleitung 32 ein Filterelement 42 vorgesehen ist, das verhindert, dass insbesondere Wasser oder unerwünschte Staubteile in die Hohlleitung 32 und damit in das Gehäuse 18 der Vorrichtung eindringen können.

Der Kabelsatz 26 ist in dem Bereich, in dem er das Gehäuse 18 durchquert, mit einem mit dem Kabelsatz 26 einstückig ausgebildeten, gummiartigen Dichtelement 44 gegen das Gehäuse luft- und wasserdicht abgedichtet. Damit wird gewährleistet, dass unerwünschte Medien im Bereich des Kabelstrangs 26 in das Gehäuse 18 der Vorrichtung 10 eindringen können.

Die Hohlleitung 32 endet innerhalb des Gehäuses 18 unmittelbar, nachdem sie sich durch das Dichtelement 44 erstreckt hat.

Das Dichtelement 44 ist außerdem in einer Ausnehmung 46 der beiden Gehäuseteile 20 und 22 angeordnet. Das Dichtelement 44 ist zwischen den beiden Gehäuseteilen 20 und 22 unter geringer Vorspannung gehaltert.

Die Betriebstemperatur der Vorrichtung 10 beträgt ca. 180 bis 200EC. Durchquert ein Kraftfahrzeug, das eine derartige Vorrichtung 10 aufweist, eine Wasserpfütze, so kann die Vorrichtung abrupt abgekühlt werden.

Aufgrund der Verbindung des Innenraumes der Vorrichtung 10 mit der Atmosphäre über die Hohlleitung 32 können innerhalb der Vorrichtung 10 entstehende Druckunterschiede sofort und wirkungsvoll ausgeglichen werden. Die Entstehung eines kritischen Über- bzw. Unterdrucks innerhalb der Vorrichtung 10 wird aufgrund der erfindungsgemäßen Belüftung der Vorrichtung 10 ausgeschlossene.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Antriebs- und/oder Abbremsvorrichtung (10), insbesondere zur Anordnung an Kraftfahrzeugen, mit einer elektrischen Antriebseinheit (12) und/oder mit einer elektromagnetischen Bremseinheit (14), wobei eine Welle (16) von der Antriebseinheit (12) antreibbar und/oder von der Bremseinheit (14) abbremsbar ist, mit einem die Antriebs- (12) und/oder Bremseinheit (14) aufnehmenden geschlossenen, insbesondere wasser- und luftdichten Gehäuse (18), und mit einem Kabelsatz (26) zur Anbindung der Antriebs- und/oder Abbremsvorrichtung (10) an eine Stromquelle, **dadurch gekennzeichnet, dass** der Kabelsatz (26) wenigstens eine Hohlleitung (32) zur Belüftung des Innenraumes des Gehäuses (18) aufweist.

2. Antriebs- und/oder Abbremsvorrichtung (10) nach Anspruch 1, **dadurch gekennzeichnet, dass** an dem der Antriebsvorrichtung (10) abgewandten Ende (40) des Kabelsatzes (26) ein das eine Ende (40) der Hohlleitung (32) umfassendes Steckerelement (36) vorgesehen ist.

3. Antriebs- und/oder Abbremsvorrichtung (10) nach Anspruch 1 oder 2, **dadurch gekennzeichnet, dass** an wenigstens einem Ende (40) der Hohlleitung (32) ein Filter (42) und/oder ein Ventil angeordnet ist.

4. Antriebs- und/oder Abbremsvorrichtung (10) nach Anspruch 1, 2 oder 3, **dadurch gekennzeichnet, dass** der Kabelsatz (26) in dem Bereich, in dem er das Gehäuse (18) durchquert, mit einem Dichtelement (44) gegen das Gehäuse (18) abgedichtet ist.

5. Antriebs- und/oder Abbremsvorrichtung (10) nach Anspruch 4, **dadurch gekennzeichnet, dass** das Dichtelement (44) einstückig mit dem Kabelsatz (26) ausgebildet ist.

6. Antriebs- und/oder Abbremsvorrichtung (10) nach Anspruch 4 oder 5, **dadurch gekennzeichnet, dass** die Hohlleitung (32) innerhalb des Gehäuses (18) unmittelbar nach dem Dichtelement (44) endet.

7. Antriebs- und/oder Abbremsvorrichtung (10) nach Anspruch 4, 5 oder 6, **dadurch gekennzeichnet, dass** das Gehäuse (18) zweiteilig ausgebildet ist, wobei das Dichtelement (44) in einer Ausnehmung (46) zwischen den beiden Gehäuseteilen (20, 22) angeordnet ist.
